(19) Europäisches Patentamt
European Patent Office
Office européen des brevets

(11) **EP 1 944 582 A1**

(12) **EUROPÄISCHE PATENTANMELDUNG**

(43) Veröffentlichungstag:
**16.07.2008 Patentblatt 2008/29**

(51) Int Cl.:
*G01D 5/244* (2006.01)    *G01D 5/347* (2006.01)

(21) Anmeldenummer: **07100296.8**

(22) Anmeldetag: **09.01.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **Leica Geosystems AG**
**9435 Heerbrugg (CH)**

(72) Erfinder:
• **Lippuner, Heinz**
**CH-9445, Rebstein (CH)**

• **Siercks, Knut**
**CH-9015, St. Gallen (CH)**
• **Aebischer, Beat**
**CH-9435, Heerbrugg (CH)**

(74) Vertreter: **Büchel, Kaminski & Partner**
**Patentanwälte Est.**
**Austrasse 79**
**9490 Vaduz (LI)**

(54) **Verfahren zur bestimmuing einer einflussgrosse auf die exzentrizitat in einem wineklmesser**

(57) In einem Verfahren zur Bestimmung wenigstens einer Einflussgrösse auf die Exzentrizität in einem Winkelmesser mit einer Detektoranordnung aus vier optischen Detektorelementen (3), einem Drehkörper mit einer Vielzahl um ein Musterzentrum (MZ) angeordneter Musterelemente (6), wobei der Drehkörper um eine Achse (4) rotierbar angeordnet ist, wird wenigstens ein Teil der Musterelemente (6) auf die Detektoranordnung abgebildet, die Positionen der auf der Detektoranordnung abgebildeten Musterelemente (6) aufgelöst und die Exzentrizität des Musterzentrums (MZ) relativ zu einem Detektorzentrum (DZ) der Detektoranordnung bestimmt. Aus einer Vielzahl von solchen Exzentrizitätsmessungen für unterschiedliche Drehlagen werden verschiedene Einflussgrössen der aktuellen Exzentrizität separiert, insbesondere durch Aggregatbildung.

Fig. 4

**Beschreibung**

Die Erfindung betrifft ein Verfahren zur Bestimmung wenigstens einer Einflussgrösse auf die gemessene Exzentrität in einem Winkelmesser nach dem Oberbegriff des Anspruchs 1 und ein Computerprogrammprodukt.

Verfahren und Vorrichtungen zum genauen Bestimmen eines Drehwinkels werden seit vielen Jahren unter anderem als Drehwinkelgeber bei Messvorrichtungen, insbesondere in der geodätischen und industriellen Vermessung, eingesetzt. Über solche Verfahren und Vorrichtungen ist es bei entsprechenden Vorkehrungen sogar möglich, mit einer Messgenauigkeit in der Grössenordnung einiger weniger Winkelsekunden einen Vollkreis in über eine Million Einheiten aufzulösen.

Um derartig hohe Genauigkeiten erreichen zu können, muss einerseits der Detektor lagestabil zu einem Lager angeordnet sein, über welches der Drehkörper relativ zum Detektor um eine Achse drehbar gelagert ist. Andererseits ist eine hohe Mass- und Formhaltigkeit des Drehkörpers, insbesondere die Anordnung und Ausbildung auf dem Drehkörper in Drehrichtung hintereinander um ein Musterzentrum angeordneter Musterelemente, eine zwingende Voraussetzung. Neben partiellen Teilungsungenauigkeiten, die auf Abweichungen der vorgegebenen Abstände zwischen einzelnen hintereinander angeordneten Musterelementen und/oder auf Abweichungen der Abmessungen der Musterelemente selbst zurückzuführen sind, verunmöglicht in der Praxis oft eine Beabstandung des Musterzentrums von der Achse, eine so genannte Exzentrität des Musterzentrums zur Achse, ein Erreichen geforderter Genauigkeiten. Aufgrund immer vorhandener Fertigungstoleranzen weist jeder Drehkörper eine Exzentrität auf, die in der Regel konstanten Wert hat. Zudem treten neben der Exzentrität des gesamten Musters, also der Gesamtheit aller Musterelemente relativ zum Drehkörper oder der Zentrierung der Teilung zur Welle, noch eigentliche Teilungsfehler des Kreises auf, d.h. eine Abweichung der einzelnen Musterelemente relativ zueinander und damit innerhalb der Anordnung der Musterelemente.

Der Drehkörper wird in einem Lager rotierbar geführt, wobei durch die mechanische Anordnung weitere Einflussgrössen auf die messbare Exzentrität resultieren. Die hieraus entstehenden Rundlaufabweichungen des Lagers können damit ebenfalls einen Beitrag zur Exzentrität liefern. Wirken beim Bestimmen von Drehwinkeln - insbesondere bei schweren Messobjekten - auf Teile der Vorrichtung nennenswerte Belastungen durch Kräfte, so können drehwinkelabhängige oder sich zeitlich ändernde Exzentritäten auftreten. Diese werden beispielsweise durch ein ohnehin vorhandenes Lagerspiel sowie Veränderung durch die Schmierung des Lagers und die Lagerbelastung bewirkt oder verstärkt. Zudem treten durch eine Neigung der Rotationsachse des Drehkörpers Taumelfehler auf.

Um solche mechanische Lagerfehler zu verringern oder gänzlich zu vermeiden, werden bisher vergleichsweise hochwertige, aufwendige Lager verwendet, welche es erlauben, die Exzentrität innerhalb einer zulässigen Toleranz zu stabilisieren, so dass zumindest keine Veränderungen einer kalibrierbaren mechanischen Exzentrität eintreten.

In vielen Winkelmessern werden die Musterelemente optisch auf eine Anordnung aus einem oder mehreren Detektorelementen, z.B. CCD- oder CMOS-Sensoren, abgebildet, wie beispielsweise in der CH 658514 geoffenbart. Aus der Lage der Musterelemente auf der Detektoranordnung bzw. deren Komponenten kann auf den Winkel des Drehkörpers gegenüber der Detektoranordnung geschlossen werden. Hierbei dient ein Detektorzentrum als Bezugsgrösse, wobei im Idealfall ohne mechanische Exzentritätsfehler das Detektorzentrum, der Drehpunkt und das Zentrum der Musterelemente zusammenfallen sollen.

Neben den bereits dargestellten mechanischen Einflussgrössen auf die gemessene Exzentrität entstehen jedoch auf Einflüsse durch die verwendeten elektronischen Komponenten. Diese resultieren z.B. aus Quantisierungsfehlern oder dem Rauschen einer Analogelektronik. Dabei sind sowohl mechanische als auch elektronische Einflussgrössen zumeist abhängig von zeitlichen Veränderungen oder aufgrund von Temperaturschwankungen.

Zur Messung der aktuellen Exzentrität ist aus der EP 1 632 754 ein Verfahren bekannt, bei dem wenigstens ein Teil einer Vielzahl um ein Musterzentrum angeordneter Musterelemente, von denen eine Vielzahl in Drehrichtung hintereinander angeordnet sind, über optische Strahlen auf einer Vielzahl aneinander gereihter Detektorelemente eines optischen Detektors wenigstens teilweise abgebildet wird. Die Musterelemente sind auf einem Drehkörper angeordnet, der mit dem Detektor um die Achse drehbar verbunden ist. Über die Detektorelemente ein und desselben Detektors werden Positionen der abgebildeten Musterelemente aufgelöst. In einem ersten Schritt werden über aufgelöste Positionen wenigstens eines Musterelements Auswirkungen einer Exzentrität des Musterzentrums zur Achse auf das Bestimmen eines Drehwinkels rechnerisch ermittelt. In einem zweiten Schritt wird unter Berücksichtigung der ermittelten Auswirkungen der Drehwinkel über die aufgelösten Positionen hintereinander angeordneter Musterelemente genau bestimmt.

Die Verfahren des Stands der Technik bestimmen nur die aktuelle Exzentrität und differenzieren dabei nicht zwischen den verschiedenen Einflussgrössen und den damit verbundenen Charakteristiken, wie z.B. unterschiedlicher zeitlicher Variabilität.

Neben einer grundsätzlichen Verringerung oder Vermeidung einiger Einflussgrössen kann beispielsweise auch die translatorische Verschiebung der Drehachse gemessen und diese Verschiebung für das Endergebnis der Messung oder auch für direkte Korrekturen berücksichtigt werden. Dies kann beispielsweise durch Messung der Verschiebung des Lagerzapfens über bekannte, berührende oder berührungslose Messverfahren, z.B. Messtaster, direkt an der Welle erfolgen. Um diese Bewegung in der Ebene zu erfassen sind mindestens 3 oder mehr solcher Weggeber notwendig. Auch zylindrische, kapazitive, die Welle umfassende Sensoren sind dabei realisierbar. Dabei ist zu berücksichtigen, dass bei kleinem Unterschied zwischen translatorischer Lagerverschiebung und diesen versch. Fehlereinflüssen auch eine exakte Ermittlung der Lagerverschiebung schwierig ist.

Durch solche den mechanischen Zustand des Systems direkt messenden Systeme werden Winkelmesser jedoch aufwendig, komplex und fehleranfällig.

Eine allgemeine Aufgabe der vorliegenden Erfindung besteht in der Verbesserung der Verfahren zur Winkelmessung, insbesondere der Exzentrizitätsbestimmung.

Eine spezifischere Aufgabe der vorliegenden Erfindung besteht darin, ein Verfahren zur Bestimmung der Einflussgrössen auf die Exzentrizität in einem Winkelmesser bereitzustellen, das ohne spezielle zusätzliche Komponenten zur Bestimmung einzelner mechanischer oder elektronischer Einflussgrössen auskommt.

Eine weitere Aufgabe der vorliegenden Erfindung besteht darin, bauliche Vereinfachungen der Lager von Drehkörpern in Winkelmessern zu ermöglichen bzw. die für diese Lager erforderlichen Anforderungen zu verringern.

Eine weitere Aufgabe der vorliegenden Erfindung besteht darin, die Einflussgrössen auf die aktuelle Exzentrizität algorithmisch bestimmbar zu machen, insbesondere auch hinsichtlich ihrer zeitlichen Veränderlichkeit.

Diese Aufgaben werden erfindungsgemäss durch die Merkmale des Anspruchs 1 oder durch Merkmale der abhängigen Ansprüche gelöst bzw. diese Lösungen weitergebildet.

Bei einem erfindungsgemässen Verfahren wird zum Bestimmen eines Exzentrizitätsfehlers für einen Drehwinkel um eine Achse wenigstens ein Teil einer Vielzahl um ein Musterzentrum angeordneter Musterelemente, von denen eine Vielzahl in Drehrichtung hintereinander angeordnet sind, über optische Strahlen auf ein oder mehrere Detektorelemente einer optischen Detektoranordnung wenigstens teilweise abgebildet. Die Musterelemente sind auf einem Drehkörper angeordnet, der mit dem Detektor um die Achse drehbar verbunden ist. Über die Detektorelemente werden Positionen der abgebildeten Musterelemente aufgelöst. In einem ersten Schritt wird für eine Vielzahl von Messungen die Exzentrizität des Musterzentrums zum Detektorzentrum rechnerisch ermittelt. In einem zweiten Schritt wird durch Aggregatbildung, d.h. durch Zusammenfassung und Verknüpfung, aus der Vielzahl von Messwerten wenigsten eine Einflussgrösse abgetrennt bzw. bestimmt. Je nach Ansatz werden die Einflussgrössen entweder bestimmt oder aber unterdrückt, z.B. durch herausmitteln. Bestimmte Einflussgrössen können dann entweder algorithmisch oder aber zur direkten Korrektur der Exzentrizität verwendet werden, z.B. zur mechanischen Korrektur der Achslage durch Stellelemente oder elektronisch durch Anpassung. Alternativ kann bei Erreichen eines Schwellwertes auch eine Fehlermeldung ausgegeben oder das Erfordernis einer Reparatur oder einer werksseitigen Korrektur angezeigt werden.

Die Erfindung basiert dabei auf der Nutzung der Detektorelemente der Detektoranordnung, d.h. der Winkelmessköpfe selber, für die Bestimmung der verschiedenen Einflussgrössen auf die Exzentrizität, wie z.B. der translatorischen Bewegung der Drehachse. Hierfür wird eine Vielzahl von Exzentrizitätsmessungen für verschiedene Winkellagen, d.h. Stellung von Drehkörper zu Detektoranordnung, durchgeführt. Die Aufnahme solcher Messungen kann dabei getrennt im Rahmen eines speziellen zweckgerichteten Durchlaufs von Kalibriermessungen erfolgen oder aber auf den fortlaufend gewonnenen Messungen im aktuellen Betrieb beruhen. Aus der Gesamtheit der Messungen können hierbei die verschiedenen Einflussgrössen separiert werden, insbesondere anhand ihrer spezifischen zeitlichen oder räumlichen Veränderlichkeit. Je nach Umfang der zur Verfügung stehenden Messungen können dabei auch zeitliche Veränderungen der Einflussgrössen auf aktuelle Exzentrizitätsmessungen abgeleitet oder modelliert werden.

Ein Beispiel für solche Einflussgrössen ist die Bestimmung der aktuellen Lage der Drehachse des Drehkörpers innerhalb des Lagers. Hierbei erfolgt eine Bezugsetzung des Drehpunktes zu einem Detektorzentrum als einer ausgezeichneten Position der Detektoranordnung. Werden viele Exzentrizitätsmessungen für alle möglichen Winkellagen durchgeführt, idealerweise gleichverteilt, so weisen die Messungen einen Anteil auf der eine Periodizität von $2\pi$ besitzt und der als Muster- oder Codefehler durch die Abweichung des Musterzentrums vom Drehzentrum entsteht. Dieser Anteil kann beispielsweise durch eine Fourierzerlegung bestimmt werden. Alternativ kann bei hinreichend grosser Zahl von Messungen und gleichmässiger Verteilung der Winkellagen eine Abseparation dieses Einflusses aber auch durch die Bildung von Mittelwerten erfolgen. Um eine zeitliche Veränderlichkeit zu bestimmen kann dabei die Mittelwertbildung mit einem Fenster als gleitender Durchschnitt erfolgen. Je nach Breite des Fensters oder ggf. einer Gewichtung der Messungen entsteht eine entsprechende Auflösung.

Die Bestimmung der Einflüsse kann dabei auch parallel auf den gleichen Sätzen an Messwerten mit unterschiedlichen Verfahren oder Parametersätzen durchgeführt werden. Zur Anwendung können dabei unterschiedlichen Verfahren, z.B. zur Analyse von Zeitreihen, Signalanalyse oder allgemeine statistische Verfahren. Dabei werden die Verfahren und deren Parameter im allgemeinen von den zu bestimmenden Einflussgrössen und deren charakteristischen Grössen abhängen. Beispielsweise können die ersten Messungen nach dem Start des Gerätes analysiert werden, um die erwärmungsbedingten Einflüsse des Lagers oder der Elektronik zu ermitteln. Je nach Lagertyp sind die typischen Zeitskalen für die Verschiebungen der Achse bekannt oder abschätzbar, so dass zu analysierende Datenmengen oder die zu verwendenden Fenster bzw. Gewichtsfunktionen entsprechend bestimmt werden können.

Neben den Einflussgrössen, die zu einem direkten Exzentrizitätsbeitrag in der Ebene der Detektoranordnung führen, wie z.B. der translatorischen Verschiebung der Lagerwelle, kann mit geeigneten Winkelmessköpfen auch die Bewegung in der Achsrichtung als Z-Richtung ermittelt werden. Bei einigen Winkelmesssystemen, wie z.B. in CH 658514, wird ein Strichcode als Muster auf einen Zeilenarray oder Flächenarray projiziert. Durch die Abstandsänderung des Codes zum Empfänger ändert sich der Projektionsmassstab des Strichcodes. Diese Änderung des Projektionsmassstabes kann als Mass für die Abstandsänderung bzw. die Position in axialer Richtung verwendet werden. Werden für zwei Detektorelemente die Abstände zum Drehkörper bestimmt, so kann auch die Verkippung der Achse bestimmt werden. Etwaige Einflüsse aufgrund einer Deformation des Drehkörpers können dabei ausgeschlossen oder abgetrennt werden, wenn wiederum eine Identifikation oder Herausmittelung des Anteils mit einer Periodizität von $2\pi$ für die Winkellagen erfolgt.

Insgesamt erlaubt das erfindungsgemässe Verfahren durch die Bildung von zielgerichteten Aggregaten aus der Vielzahl von Messungen eine Identifikation und Berücksichtigung der verschiedenen Einflussgrössen auf die Exzentrizität. Je nach Wahl der Aggregatbildung wird dabei eine Einflussgrösse bestimmt oder unterdrückt, während die Wirkungen der übrigen Einflussgrössen ein Residuum bilden.

Ein erfindungsgemässes Verfahren wird nachfolgend anhand von in der Zeichnung schematisch dargestellten Ausführungsbeispielen rein beispielhaft näher beschrieben. Im einzelnen zeigen

Fig.1    die schematische Darstellung des strukturellen Aufbaus eines gattungsgemässen Winkelmessers;

Fig.2    die schematische Darstellung der Lage des Drehkörpers ohne Exzentrizitätsfehler;

Fig.3    die schematische Darstellung der Auswirkung der Einflussgrösse eines Codefehlers;

Fig.4    die schematische Darstellung der Auswirkung der Einflussgrössen eines Codefehlers und einer translatorischen Verschiebung der Drehachse;

Fig.5    die schematische Darstellung der Separation der Einflussgrössen eines Codefehlers und einer translatorischen Verschiebung der Drehachse und

Fig.6    die schematische Darstellung der geometrischen Beziehungen für Bestimmung der axialen Position des Drehkörpers.

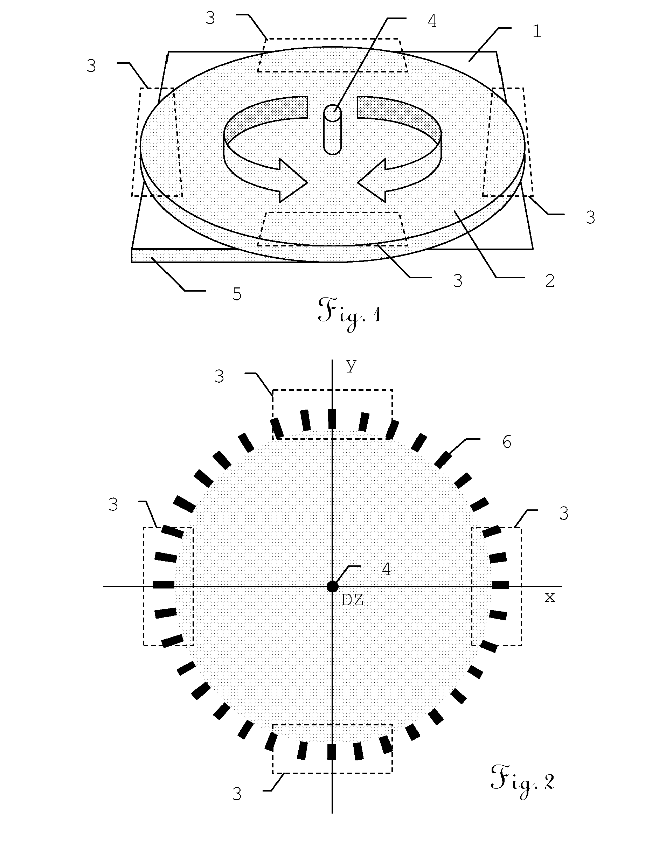

Fig.1 zeigt die schematische Darstellung des strukturellen Aufbaus eines gattungsgemässen Winkelmessers mit einem Trägerelement 1 mit einem Drehkörper 2 mit einer Vielzahl um ein Musterzentrum angeordneter Musterelemente, einer Detektoranordnung aus vier optischen Detektorelementen 3. Der scheibenförmige Drehkörper 2 ist gegenüber dem Trägerelement 1 um eine Achse 4 rotierbar angeordnet.

Zur Bestimmung einer aktuellen Drehlage des Drehkörpers 2 relativ zum Trägerelement 1 bzw. zur Detektoranordnung wird wenigstens ein Teil der Musterelemente auf die Detektorelemente 3 der Detektoranordnung abgebildet. Hierbei werden die Positionen der auf der Detektoranordnung abgebildeten Musterelemente aufgelöst und Drehlage sowie Exzentrizität des Musterzentrums relativ zu einem Detektorzentrum der Detektoranordnung abgeleitet. Je nach Ausgestaltung der Detektoranordnung und Zahl der Detektorelemente 2 kann die Exzentrizität in mehreren Schritten oder direkt im Zuge der Drehwinkelbestimmung abgeleitet werden. Um eine parallele Bestimmung von Drehwinkel und Exzentrizität mit hoher Auflösung zu ermöglichen, werden drei, vier oder auch mehr Detektorelemente 2 verwendet. Die gemessene Exzentrizität wird im Rahmen der einzelnen Messung noch nicht bezüglich ihrer unterschiedlichen Einflussgrössen separiert.

Erfindungsgemäss wird eine Vielzahl von Exzentrizitätsmessungen für unterschiedliche Drehlagen des Drehkörpers 2 durchgeführt. Dies kann als separater Mess-oder Kalibrierdurchgang erfolgen und/oder es können die Messergebnisse während des Betriebs aufgenommen und genutzt werden. Aus der Vielzahl von Exzentrizitätsmessungen werden durch eine Rechen- und Auswerteeinheit 5 verschiedene Einflussgrössen der aktuellen Exzentrizität separiert, insbesondere durch Aggregatbildung. Die Einflussgrössen können gespeichert bzw. zur Modellbildung verwendet werden und in aktuellen oder nachfolgenden Messungen sowie für mechanische oder elektronische Korrekturen verwendet werden.

Die dem Verfahren zugrundeliegende Beziehungen werden in Fig.2-4 erläutert, wobei in Fig.2 die schematische Darstellung der Lage des Drehkörpers ohne Exzentrizitätsfehler erfolgt. Dargestellt werden die Musterelemente 6, deren Musterzentrum in diesem Fall mit der Drehachse 4 zusammenfällt. Für die Detektoranordnung aus den vier Detektorelementen 3 kann ein Detektorzentrum DZ definiert werden, das im Idealfall mit dem Musterzentrum und der Drehachse 4 übereinstimmen soll, so dass keine Exzentrizitätsfehler auftreten. Bezüglich der Detektoranordnung können zudem eine x- und eine y-Achse als Bezugsgrössen definiert werden, bezüglich derer die Drehlagen bestimmt werden. In den Beispielen wird der auf dem Drehkörper angeordnete Code lediglich aus Veranschaulichungsgründen als Inkrementalcode mit einer äquidistanten Abfolge von gleichartigen Musterelementen 6 dargestellt. Das erfindungsgemässe Verfahren ist jedoch nicht hierauf beschränkt und kann grundsätzlich für alle Typen von Inkremental- oder Absolutcodes Verwendung finden.

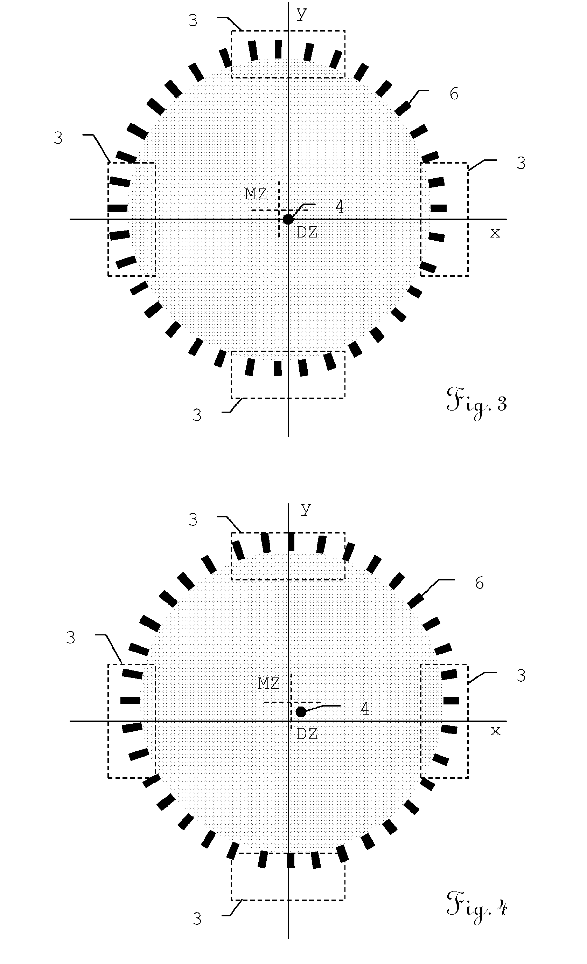

In Fig.3 wird die Auswirkung der Einflussgrösse eines Codefehlers schematisch dargestellt. In diesem Fall ist das Musterzentrum MZ als geometrischer Mittelpunkt der Musterelemente 6 bzw. des durch diese definierten Gesamtcodes nach links oben verschoben. Bei einer Rotation um die Drehachse 4, die hier weiterhin mit dem Detektorzentrum DZ zusammenfällt, vollführt das Musterzentrum eine kreisende Bewegung um das Detektorzentrum DZ. Die Exzentrizität des Musterzentrums MZ kann anhand der gegenüber Fig.2 verschobenen Positionen der Musterelemente 6 auf den Detektorelementen 3 bestimmt werden. Die Detektorelemente 3 registrieren hierbei ein in Abhängigkeit der Drehlage sinusförmig mit der Periode $2\pi$ variierendes Ausmass der Exzentrizität.

Fig.4 zeigt die schematische Darstellung der Auswirkung der Einflussgrössen eines Codefehlers und einer translatorischen Verschiebung der Drehachse. Nun fallen Musterzentrum MZ, Detektorzentrum DZ und Drehachse 4 auseinander. Durch die Rotation des Drehkörpers um die Drehachse 4 bewegt sich das Musterzentrum MZ kreisförmig um diese Drehachse 4, die wiederum eine Exzentrizität bzgl. des Detektorzentrum DZ aufweist. In diesem Fall überlagern sich zwei Einflussgrössen der Exzentrizität. Die Detektorelemente 3 der Detektoranordnung bestimmen stets die Position der Musterelemente 6 ohne direkte Auflösung der Einflussgrössen, aus denen die Gesamtexzentrizität resultiert. Durch die Überlagerung der beiden Exzentrizitätseinflüsse registrieren die Detektorelemente 3 hierbei ein gegenüber den Achsen versetztes und in Abhängigkeit der Drehlage sinusförmig mit der Periode $2\pi$ variierendes Ausmass der Exzentrizität. Durch eine Trennung der beiden Einflussgrössen bzw. Exzentrizitätsursachen kann die Lage des aktuellen Drehpunkts des Drehkörpers bezüglich des Detektorzentrums DZ als translatorische Lagerverschiebung bestimmt werden. Neben der Auswertung der winkel- bzw. drehlagenabhängigen Exzentrizitätsmessungen kann auch eine Betrachtung der Zeitabhängigkeit erfolgen, bspw. durch eine fortlaufende Analyse während des Betriebes oder eine automatische Kalibriersequenz über den vollen Winkelkreis beim Starten des Gerätes. Die hierbei gemessenen Werte können dann hinsichtlich der Veränderung der Einflussgrössen in zeitlicher Hinsicht analysiert und entsprechende Modelle oder Funktionen, z.B. für die zeitliche Veränderung der Lage des aktuellen Drehpunkts, abgeleitet werden.

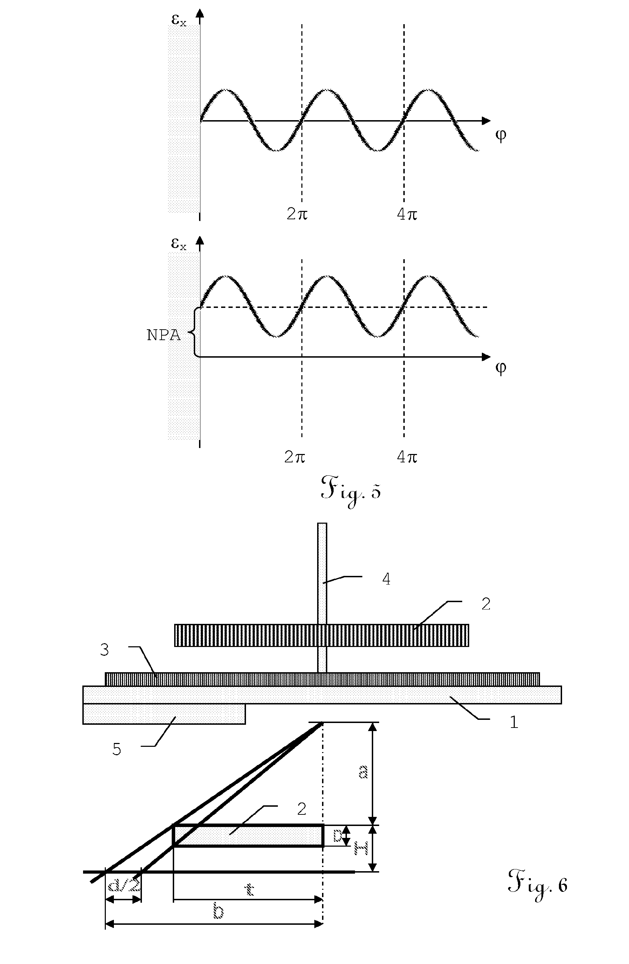

In Fig.5 wird die Separation der Einflussgrössen eines Codefehlers und einer translatorischen Verschiebung der Drehachse erläutert. Dargestellt wird die Grösse des Exzentrizitätsfehlers $\varepsilon_x$ bezüglich der x-Achse in Abhängigkeit von der Drehlage $\varphi$.

Die obere Darstellung zeigt hierbei die Veränderung für den in Fig.3 dargestellten reinen Codefehler, d.h. die Abweichung des Musterzentrums vom Drehpunkt, der seinerseits mit dem Detektorzentrum zusammenfällt. Der Exzentrizitätsfehlers $\varepsilon_x$ variiert sinusförmig um die Null-Lage, wobei aus Veranschaulichungsgründen auch die Wiederholung einer Rotation als Periode bis $4\pi$ dargestellt wird.

Die untere Darstellung zeigt hierbei die Veränderung für die in Fig.4 dargestellte Kombination der Einflüsse aus Codefehler und translatorischer Verschiebung der Drehachse, d.h. die Abweichung des Musterzentrums vom Drehpunkt, sowie dessen Abweichung vom Detektorzentrum. Der Exzentrizitätsfehlers $\varepsilon_x$ variiert sinusförmig um die um einen nichtperiodischen Anteil NPA verschobene Null-Lage, wobei aus Veranschaulichungsgründen auch hier die Wiederholung einer Rotation als Periode bis $4\pi$ dargestellt wird.

Erfolgen die Messungen mit hoher Frequenz und somit unterhalb der Zeitskala für Veränderungen der translatorischen Verschiebung, so kann die Position der Drehachse für die Zwecke der aktuellen Bestimmung als statisch betrachtet werden. Sind bei kleiner Zahl von Messungen die Drehlagen gleichverteilt bzw. die Zahl der Messungen hinreichend gross, so können die Einflüsse der sinusförmigen Veränderungen durch eine Mittelwertbildung eliminiert werden, insbesondere durch einen gleitenden Mittelwert, der durch sein Erfassungsfenster auch eine zeitliche Einschränkung der zu berücksichtigenden Werte erlaubt. Hierbei können allgemeine statistische Ansätze ergänzend oder alternativ zur Anwendung kommen, z.B. eine Gewichtung von Messungen anhand ihres Messzeitpunktes.

Der Code- bzw. Teilungsfehler als eine musterspezifische Einflussgrösse mit einer der vollen Rotation des Drehkörpers entsprechenden Periodizität kann aber auch durch andere entsprechend geeignete Verfahren separiert werden, z.B. durch eine Fourier-Zerlegung. Dies bietet sich beispielsweise bei verrauschten oder nicht über den Vollkreis gleichverteilten Messwerten an. Auch erlaubt dies eine Analyse von innerhalb des auszuwertenden Messintervalls nicht statischen Einflussgrössen, wie z.B. einer driftenden, nutierende oder präzedierenden Drehachse, deren harmonische Anteile so getrennt werden können.

Eine Ergänzung der Bestimmung von Einflussgrössen stellt die Bestimmung vertikaler Effekte dar, d.h. die Berücksichtigung der z-Achse, wie dies in Fig.6 anhand der Darstellung der geometrischen Beziehungen für Bestimmung der axialen Position des Drehkörpers 2 erläutert wird. Hierbei wird die Lage des Drehkörpers 2 oder von Musterelementen des Drehkörpers 2 in axialer Richtung anhand des Projektionsmassstabs der Musterelemente auf die Detektoranordnung bzw. die Detektorelemente 3 durch die auf dem Trägerelement 1 angeordnete Rechen- und Auswerteeinheit 5 bestimmt. Weist die Detektoranordnung wenigstens zwei Detektorelemente 3 auf, insbesondere mit einer orthogonalen Ausrichtung, so kann aus den beiden Distanzwerten für die unterschiedlichen Position eine Verkippung der Drehachse 4 abgeleitet wird.

Die geometrischen Beziehungen stellen sich dabei wie folgt dar

$$\frac{a}{t} = \frac{a+H}{b} \qquad (1)$$

$$\frac{a+D}{t} = \frac{a+H}{b-d/2} \qquad (2)$$

wobei

a   den Abstand von Drehkörper zu einer beleuchtenden Quelle,
t   den Radius des Drehkörpers,
D   die Verschiebung des Drehkörpers als Fehler,
H   den Abstand der Oberseite des Drehkörpers zum Detektorelement,
b   die halbe Länge des Detektorelementes,
d   die Auflösung des Detektorelementes

bezeichnen, mit a, t, H gegeben, b, b-d gemessen und D gesucht. Aus (1) und (2) folgt die Beziehung

$$D = \frac{a \cdot d}{2b-d} \approx a/2b \cdot d \qquad (3)$$

so daß sich für ein Zahlenbeispiel mit a = 30 mm, b = 4 mm, $d_{min}$ = 0.001 mm eine Auflösung und damit Messgenauigkeit für die Verschiebung des Drehkörpers von 3.75 $\mu$m folgt.

Die Bestimmung der Distanz des Drehkörpers 2 zum Detektorelement 3 bzw. der Detektoranordnung ist hierbei auch unabhängig von den anderen Verfahrensteilen möglich, d.h. insbesondere auch ohne die Separation der verschiedenen Einflussgrössen. Damit kann dieser Ansatz auch unabhängig vom erfindungsgemässen Verfahren zum Einsatz kommen.

Es versteht sich, dass diese dargestellten Figuren nur Beispiele möglicher Ausführungsformen schematisch darstellen. In den Darstellungen wurden weitere elektronische Steuer- und Versorgungsanteile sowie Montagekomponenten lediglich aus Gründen der Anschaulichkeit nicht dargestellt.

**Patentansprüche**

**1.** Verfahren zur Bestimmung wenigstens einer Einflussgrösse auf die Exzentrizität in einem Winkelmesser mit

• einem Trägerelement (1) mit einer Detektoranordnung aus wenigstens einem optischen Detektorelement (3), vorzugsweise drei oder vier optischen Detektorelementen (3),
• einem Drehkörper (2) mit einer Vielzahl um ein Musterzentrum (MZ) angeordneter Musterelemente (6), wobei der Drehkörper (2) gegenüber dem Trägerelement (1) um eine Achse (4) rotierbar angeordnet ist, und

mit

- einem Abbilden von wenigstens einem Teil der Musterelemente (6) auf die Detektoranordnung,
- einem Auflösen der Positionen der auf der Detektoranordnung abgebildeten Musterelemente (6),
- einem Messen der Exzentrizität des Musterzentrums (MZ) relativ zu einem Detektorzentrum (DZ) der Detektoranordnung,

**dadurch gekennzeichnet, dass**

- eine Vielzahl von Exzentrizitätsmessungen für unterschiedliche Drehlagen erfolgt und
- aus der Vielzahl von Exzentrizitätsmessungen wenigstens eine Einflussgrösse der Exzentrizität separiert wird, insbesondere durch Aggregatbildung.

2. Verfahren nach Anspruch 1,
**dadurch gekennzeichnet, dass**
die Einflussgrössen der aktuellen Exzentrizität durch eine Fourier-Zerlegung separiert wird.

3. Verfahren nach Anspruch 1 oder 2,
**dadurch gekennzeichnet, dass**
eine musterspezifische Einflussgrösse mit einer der vollen Rotation des Drehkörpers (2) entsprechenden Periodizität als Teilungsfehler separiert wird.

4. Verfahren nach einem der vorangehenden Ansprüche,
**dadurch gekennzeichnet, dass**
ein Mittelwert aus der Vielzahl von Exzentrizitätsmessungen gebildet wird, insbesondere ein gleitender Mittelwert.

5. Verfahren nach einem der vorangehenden Ansprüche,
**dadurch gekennzeichnet, dass**
eine Lage des aktuellen Drehpunkts des Drehkörpers (2) bezüglich des Detektorzentrums (DZ) als translatorische Lagerverschiebung bestimmt wird.

6. Verfahren nach Anspruch 5,
**dadurch gekennzeichnet, dass**
die zeitliche Veränderung der Lage des aktuellen Drehpunkts bestimmt wird.

7. Verfahren nach einem der vorangehenden Ansprüche,
**dadurch gekennzeichnet, dass**
die Lage des Drehkörpers (2) oder die Lage von Musterelementen (6) des Drehkörpers (2) in axialer Richtung anhand des Projektionsmassstabs der Musterelemente (6) auf die Detektoranordnung bestimmt wird.

8. Verfahren nach Anspruch 7,
**dadurch gekennzeichnet, dass**
die Lage von Musterelementen (6) des Drehkörpers (2) in axialer Richtung auf die Detektoranordnung bestimmt wird, wobei die Detektoranordnung wenigstens zwei Detektorelemente (3) aufweist, und aus der Lage eine Verkippung der Achse (4) abgeleitet wird.

9. Computerprogramm-Produkt mit Programmcode, der auf einem maschinenlesbaren Träger gespeichert ist oder durch eine elektromagnetische Trägerwelle verkörpert ist, mit einem Programmcode-Segment zur Durchführung wenigstens eines der Schritte des Verfahrens nach einem der Ansprüche 1 bis 8.

Fig. 1

Fig. 2

Fig. 3

Fig. 4

$$\mathfrak{Fig}. 5$$

$$\mathfrak{Fig}. 6$$

**Europäisches Patentamt**

## EUROPÄISCHER RECHERCHENBERICHT

Nummer der Anmeldung

EP 07 10 0296

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2001/013765 A1 (YAMAMOTO SHINJI [JP] ET AL) 16. August 2001 (2001-08-16)<br>* Absatz [0030] - Absatz [0032] *<br>* Absatz [0034] *<br>* Absatz [0039] *<br>* Absatz [0043] *<br>* Absatz [0046] *<br>* Absatz [0051] - Absatz [0055] *<br>----- | 1,4,7-9 | INV.<br>G01D5/244<br>G01D5/347 |
| X | DE 199 07 326 A1 (HEIDENHAIN GMBH DR JOHANNES [DE])<br>24. August 2000 (2000-08-24)<br>* Spalte 2, Zeile 66 - Spalte 3, Zeile 46 *<br>* Spalte 4, Zeile 23 - Zeile 41 *<br>* Spalte 4, Zeile 53 - Zeile 67 *<br>* Spalte 6, Zeile 5 - Zeile 19 *<br>* Spalte 6, Zeile 65 - Spalte 7, Zeile 26 *<br>----- | 1,5,6,9 | |
| D,X | EP 1 632 754 A (LEICA GEOSYSTEMS AG [CH]) 8. März 2006 (2006-03-08)<br>* Absatz [0009] *<br>* Absatz [0015] - Absatz [0019] *<br>* Absatz [0024] - Absatz [0027] *<br>* Absatz [0048] *<br>----- | 1,4,9 | RECHERCHIERTE SACHGEBIETE (IPC)<br><br>G01D |

Der vorliegende Recherchenbericht wurde für alle Patentansprüche erstellt

| Recherchenort | Abschlußdatum der Recherche | Prüfer |
|---|---|---|
| Den Haag | 27. Juli 2007 | Keita, Mamadou |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 1 944 582 A1

**ANHANG ZUM EUROPÄISCHEN RECHERCHENBERICHT
ÜBER DIE EUROPÄISCHE PATENTANMELDUNG NR.**

EP 07 10 0296

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-07-2007

| Im Recherchenbericht angeführtes Patentdokument | Datum der Veröffentlichung | Mitglied(er) der Patentfamilie | Datum der Veröffentlichung |
|---|---|---|---|
| US 2001013765 A1 | 16-08-2001 | JP 2001188017 A | 10-07-2001 |
| DE 19907326 A1 | 24-08-2000 | JP 2000241157 A<br>US 6410910 B1 | 08-09-2000<br>25-06-2002 |
| EP 1632754 A | 08-03-2006 | AU 2005205743 A1<br>CA 2517397 A1<br>CN 1743815 A<br>JP 2006071634 A<br>US 2006049342 A1 | 23-03-2006<br>03-03-2006<br>08-03-2006<br>16-03-2006<br>09-03-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 658514

- EP 1632754 A